Europäisches Patentamt

European Patent Office

Office européen des brevets

(11) Publication number: **0 019 825
B1**

(12) **EUROPEAN PATENT SPECIFICATION**

(45) Date of publication of patent specification: **24.04.85**

(51) Int. Cl.⁴: **G 11 B 15/60**

(21) Application number: **80102754.1**

(22) Date of filing: **19.05.80**

(54) **Tape guide device of rotary head type video tape recorder.**

(30) Priority: **18.05.79 JP 61818/79
18.05.79 JP 61819/79**

(43) Date of publication of application:
**10.12.80 Bulletin 80/25**

(45) Publication of the grant of the patent:
**24.04.85 Bulletin 85/17**

(84) Designated Contracting States:
**DE GB**

(56) References cited:
**DE-A-2 803 683
FR-A-1 508 628
FR-A-2 321 166
US-A-3 955 215**

(73) Proprietor: **Matsushita Electric Industrial Co.,
Ltd.
1006, Oaza Kadoma
Kadoma-shi Osaka-fu, 571 (JP)**

(72) Inventor: **Kitagawa, Haruhiko
609-23, Fukumoto
Okucho Oku-gun, Okayama-ken (JP)**
Inventor: **Ito, Hiroyuki
383-1, Ikoshi
Saidaiji, Okayama-shi (JP)**
Inventor: **Ichiyanagi, Takashi
11-26, Higashikori-3-chome
Hirakata-shi (JP)**
Inventor: **Imanishi, Kiyokazu
3-1, Higashitoyouracho
Higashiosaka-shhi (JP)**

(74) Representative: **Patentanwälte Leinweber &
Zimmermann
Rosental 7/II Aufg.
D-8000 München 2 (DE)**

Courier Press, Leamington Spa, England.

## Description

This invention relates to a tape guide device of a rotary head type video tape recorder, comprising: an upper rotary cylindrical portion and a lower stationary cylindrical portion constituting a head cylindrical drum; an offset portion formed on an outer circumferential surface of said lower stationary cylindrical portion for guiding a magnetic tape in its travel around the head cylindrical drum, said offset portion extending around the entire circumference of 360° and being composed of a linear section in which the magnetic tape is brought into contact therewith and a further section in which the magnetic tape is not brought into contact therewith; and a plurality of guide pins each disposed on one of opposite sides of the head cylindrical drum for guiding magnetic tape to and from the head cylindrical drum.

In a tape guide device of the above-referenced type the magnetic tape helically contacts the outer circumferential surface of the head cylindrical drum for a circumferential extent in the order of 180° and travels at a predetermined speed while the lower edge of the tape is guided by the lead which is formed by the offset portion of the lower stationary cylindrical portion of the cylindrical drum. A magnetic head is attached to the upper rotary cylindrical portion and obliquely traverses the magnetic tape as the latter travels around the head cylindrical drum, to record or reproduce video signals on the magnetic tape.

In one known tape guide device of the above-referenced type (FR—A 2 321 166) the further section which interconnects the end portions of the linear section in which the magnetic tape is brought into contact with the offset portion extends as a straight line in the axial direction of the drum thus causing sharp directional changes between the linear section and the further section at the respective junctions of these sections. It seems therefore not to be possible to machine the offset portion by the cutting tool of a lathe, since the cutting tool would not be able to properly follow this rapid directional change in the axial direction.

Another known tape guide device of the above-referenced type (US—A—3 955 215) in which the offset portion is cut by means of a lathe considers the difficulty experienced when attempting to form the radially extending shoulder of the offset portion exactly at right angles to the circumferential surface of the cylindrical portion. In order to avoid any curved radius portion between the radially extending shoulder and the circumferential surface a groove is undercut from this surface with the result that the magnetic tape riding on the circumferential surface does not longer come into contact with the curved radius portion which is now part of the undercut groove and therefore out of contact with the tape. However, no consideration is made on how to select the shape of the further section in which the magnetic tape is not brought into contact and which interconnects the end portions of the linear section in which the magnetic tape is brought into contact with the drum in order to optimize the machining conditions for the offset portion.

Another known tape guide device of a rotary head type video tape recorder (FR—A—1 508 628) uses a different type of lead for the magnetic tape. This lead is in the form of a relatively small groove having a width essentially smaller than the width of the magnetic tape. The groove starts from a certain entry point of the magnetic tape to the stationary drum and extends helically to a certain exit point of the tape without having any further connecting part between the entry and exit points. The magnetic tape is guided within this groove by having its upper edge pulled into this groove.

Finally, there is also known a tape guide device of a rotary head type video tape recorder (DE—A—28 03 683) which comprises an upper rotary cylindrical portion and a lower stationary cylindrical portion constituting a head cylindrical drum and in which the lead for guiding the magnetic tape is formed by a shallow groove recessed in the outer circumferential surface of the upper and lower cylindrical portions and having a width corresponding to the width of the magnetic tape. Although this tape lead is composed of a linear section to be contacted with the magnetic tape and a further section in which no contact with the magnetic tape occurs and which interconnects the end portions of the linear section there is no specific disclosure on the choice of shape of the further section which allows for suitable machining conditions in manufacturing the lead.

It is therefore an object of the present invention to provide for a tape guide device of a rotary head type video tape recorder of the above-referenced type in which by a suitable choice of the shape of the offset portion the followability of a cutting tool carrying out a reciprocating movement in machining the offset portion is improved and the working accuracy and productivity is enhanced.

According to the invention this object is attained in that said offset portion has, in the section thereof with which the magnetic tape is not brought into contact, a configuration consisting only of two parabolic lines connected to one another, the absolute value of their second derivatives with respect to the coordinate value in the circumferential direction of the cylindrical portion being minimized.

There is also an alternative way for attaining the above object provided by the invention which resides in that said further section has a configuration comprising at least two curved parts which are such that the second derivative of the offset portion with respect to the coordinate value in the circumferential direction of the cylindrical portion is continuous over the entire circumference.

In either of the above solutions any discontinuities or exceedingly rapid fluctuations in the change of acceleration of the reciprocating cutting tool forming the offset portion are avoided with the result that there is a remarkable decrease in vibration of the machine tool. As a result there is an effective improvement in precision and productivity.

Additional and other objects, features and advantages of the invention will become more apparent from the description set forth hereinafter when considered in conjunction with the accompanying drawings.

Brief Description of the Drawings

Fig. 1 is a perspective view of the tape guide device of a rotary head type VTR;

Fig. 2 is a view in explanation of the method for cutting the outer circumferential surface of the lower stationary cylindrical portion of the VTR in order to form a lead for guiding the magnetic tape;

Fig. 3 is a developed view showing the configuration of the lead of the prior art;

Fig. 4 is a view showing the shiftings of a tool rest for cutting the lead of the prior art;

Fig. 5a is a developed view showing the configuration of the lead comprising one embodiment of the invention;

Fig. 5b is a view showing changes in the velocity and acceleration of the tool rest for cutting the lead of the configuration shown in Fig. 5a;

Fig. 6a is a developed view showing the configuration of the lead comprising still another embodiment of the invention; and

Fig. 6b is a view showing changes in the velocity and acceleration of the tool rest for cutting the lead of the configuration shown in Fig. 6a.

Description of the Preferred Embodiments

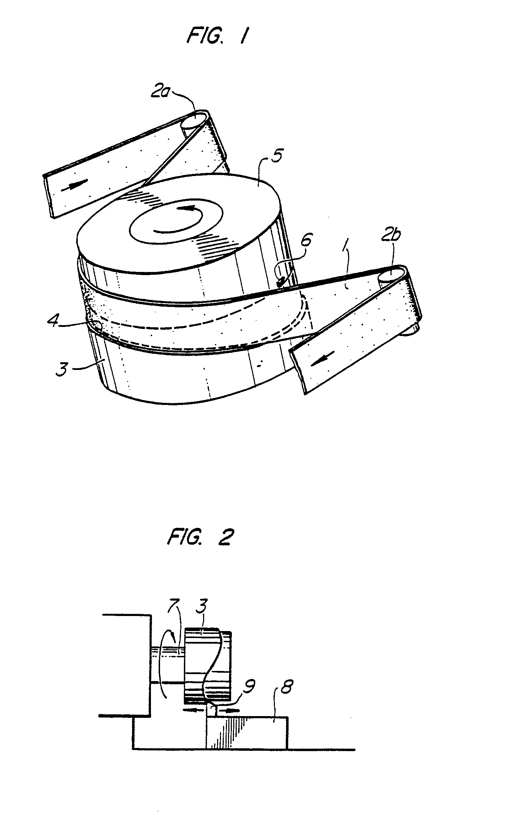

To enable the present invention to be clearly understood, a tape guide device of a rotary head type VTR of the helical scanning system will be described in some detail, and thereafter preferred embodiments of the invention will be described. Fig. 1 shows a magnetic tape 1 guided by a plurality of guide pins 2a and 2b and helically contacting an outer circumferential surface of an upper rotary cylindrical portion 5 and a lower stationary cylindrical portion 3 constituting a head cylindrical drum of the tape guide device to travel at a predetermined velocity around the head cylindrical drum for a circumferential extent on the order of 180° while a lower edge of the magnetic tape 1 is guided by an offset portion or a lead 4 formed on the outer circumferential surface of the lower stationary cylindrical portion 3 for guiding the tape 1. A magnetic head 6 is attached to the upper rotary cylindrical portion 3 and obliquely traverses the magnetic tape 1 to record or reproduce video signals.

In the tape guide device of the aforesaid construction, it is essential that the outer circumferential surfaces of the upper rotary cylindrical portion 5 and the lower stationary cylindrical portion 3 and the lead 4 formed on the lower stationary cylindrical portion 3 should be accurately fabricated and be correctly assembled. If this is not the case, the condition in which the magnetic head 6 contacts the magnetic tape 1 would become unstable and some irregularities would be encountered in the images reproduced by the VTR.

Fig. 2 shows the manner in which the lead 4 is cut on the outer circumferential surface of the lower stationary cylindrical portion 3 by means of a lathe. More specifically, the lower stationary cylindrical portion 3 is secured to a main spindle 7 and rotated at a predetermined velocity, and a cutting tool 9 secured to a tool rest 8 moves in reciprocatory movement in the directions of arrows (in the directions of the axis of the main spindle 7) illustrated in the figure relative to the lower stationary cylindrical portion 3 in synchronism with the rotation of the main spindle 7, to cut the lead 4. Thus, the position of the tool rest 8 during its reciprocatory movement should match the configuration of the lead 4.

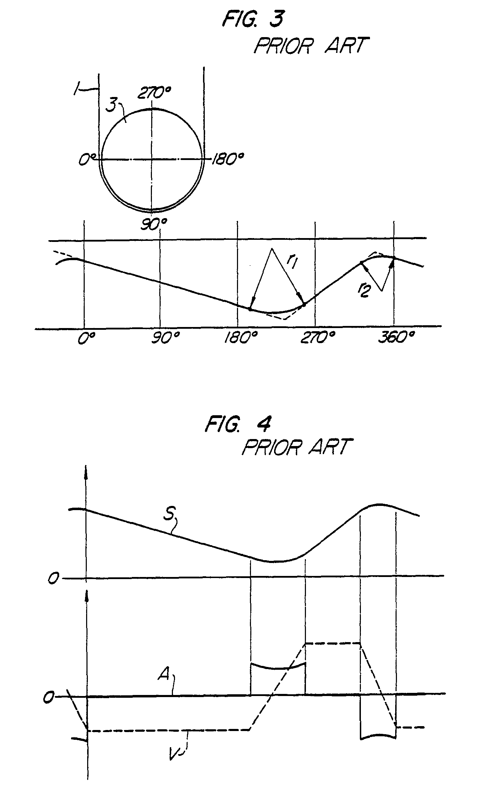

Fig. 3 shows in a developed view the configuration of the lead of the prior art cut on the outer circumferential surface of the lower stationary cylindrical portion. The magnetic tape 1 travels around the lower stationary cylindrical portion 3 for a circumferential extent on the order of 180°, and the section of the lead with which the tape 1 is in contact is linear in configuration. The rest of the lead 4 which has nothing to do with the travel of the tape 1 has a configuration consisting of straight lines and arcs in combination extending for an extent from 180° to 360°.

Fig. 4 shows shiftings, velocities and accelerations of the tool rest 8 which should occur during its movement for cutting the lead 4 of the aforesaid configuration by means of a lathe. In the Fig. 4, S, V and A designate shiftings, velocities and accelerations of the tool rest 8 respectively. The acceleration A is zero (0) in cutting the linear sections of the lead 4, but it is necessary to impart a considerably high degree of acceleration to the tool rest 8 in cutting arcuate sections of the lead 4. This would result in an unduly large force being exerted on the tool rest 8 and might cause vibration which would adversely affect the operation of the machine tool. The result would be that the precision with which the lead should be cut is reduced and the circularity of the head cylindrical drum is impaired. The use of the tape guide device including such head cylindrical drum could not guide a tape correctly and would cause irregularities in the images reproduced by the VTR.

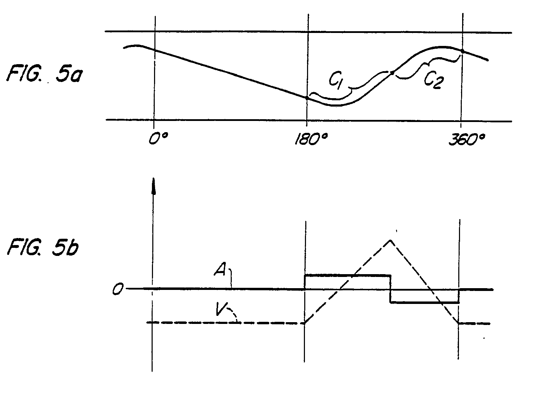

Preferred embodiments of the invention free from the aforesaid disadvantages of the prior art will now be described. In the embodiment shown in Fig. 5a, a section of the lead 4 extending for a circumferential extent on the order of 180° with which the magnetic tape 1 is brought into contact is linear, and the other section of the lead 4 extending for another circumferential extent from 180° to 360° with which the tape 1 is not brought into contact consists of a concave parabolic portion C1 and a convex parabolic portion C2. Fig. 5b shows changes in the velocity V and acceleration A of the tool rest 8 which occur when the lead 4 of the configuration shown in Fig. 5a is cut. In the Fig. 5b, it will be seen that the accelerations are greatly reduced in value in comparison with the accelerations of the tool rest 8 represented by the acceleration curve shown in Fig. 4 obtained in cutting the lead 4 of the prior art.

When the energy of the movement of the tool rest 8 is taken into consideration, this phenomenon could be explained by the following:

(1) The value obtained by integrating the accelerations should be zero (0).

(2) The value obtained by integrating the absolute values of the accelerations should be constant.

When the lead formed on the outer circumferential surface of the lower stationary cylindrical portion of the head cylindrical drum of the tape guide device is of the aforesaid constructional form according to the invention, the accelerations of the tool rest 8 can be minimized in forming the lead 4 by means of a lathe so that the tool rest 8 can readily follow up movement of the lower cylindrical portion supported by the main spindle and undesirable vibration of the machine tool can be minimized. Thus circularity of the head cylindrical drum can be improved and the precision with which the lead is cut can be increased. The tape guide device provided with such a head cylindrical drum is capable of guiding a magnetic tape with increased precision, thereby eliminating irregularities in the images reproduced by the VTR which would otherwise occur.

When the tool rest 8 is moved in reciprocatory movement by means of a cam mechanism as is usually the case, the invention has the effect of reducing wear that might be caused on the cam surface.

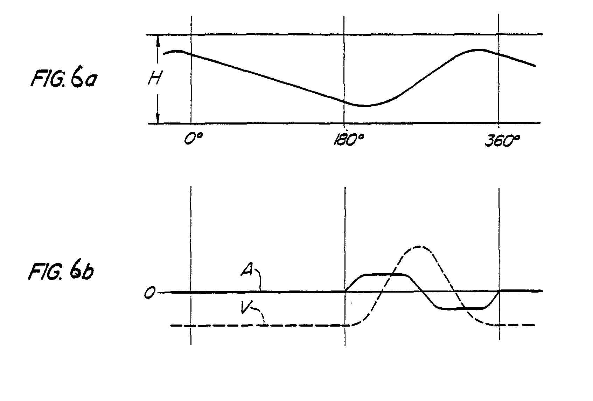

Figs. 6a and 6b show still another embodiment of the invention in which the lead 4 had a configuration such that the acceleration curve is continuous. That is, the lead formed on the outer circumferential surface of the head cylindrical drum has a configuration consisting of lines which are such that their second differential coefficients are continuous over the entire circumferential extent of the drum with respect to the coordinates disposed on the periphery of the drum.

Fig. 6a shows another constructional form of the invention wherein the lead 4 has a modified trapezoidal curve (a term expressing a cam curve), in which acceleration shows changes continuously, in a section thereof extending for a circumferential extent of 180° other than a linear section thereof in which the magnetic tape 1 is engaged. Fig. 6b shows changes in velocity V and acceleration A occurring when the lead 4 of the configuration shown in Fig. 6a is cut. In comparison with the acceleration curve (See Fig. 4) obtained when the lead 4 of the prior art is cut, the acceleration curve obtained in the invention offers the following advantages:

(1) Acceleration shows changes continuously, so that adverse effects exerted to the machine tool can be prevented.

(2) The acceleration sections and the deceleration sections are increased and the absolute value of acceleration is smaller in the embodiment shown in Fig. 6b than in the prior art shown in Fig. 4, so that the cutting tool and the tool rest can readily follow up the movement of the lower cylindrical portion supported by the main spindle.

Thus, the circularity of the head cylindrical drum can be improved and the precision with which the lead is produced can be increased by adopting the constructional form of the invention shown in Figs. 6a and 6b. The magnetic tape is guided with increased accuracy by the lead and irregularities in the images reproduced by the VTR can be minimized.

In the constructional form of the invention shown in Fig. 6a, the lead 4 is in the form of a modified trapezoidal curve. It is to be understood, however, that the invention is not limited to this specific form of the lead 4 and that any other curve, such as cycloidal curve, composite sine curve, modified sine curve, parabolic sine curve, etc., in which acceleration shows changes continuously may be used with the same effect.

Also, in Fig. 6a, the lead 4 should be positioned quite near the upper end of the lower stationary cylindrical portion having a height H in the vicinity to 0° of the circumferential extent of the lower stationary cylindrical portion, in the case of the magnetic head scanning system. To meet this requirement, it may be enough to use a nonsymmetrical modified trapezoidal curve in which the absolute value of the maximum second differential coefficient is not equal to the absolute value of the minimum second differential coefficient, or a trapecloid curve or other nonsymmetrical curve.

## Claims

1. A tape guide device of a rotary head type video tape recorder, comprising:

an upper rotary cylindrical portion (5) and a lower stationary cylindrical portion (3) constituting a head cylindrical drum;

an offset portion (4) formed on an outer circumferential surface of said lower stationary cylindrical portion (3) for guiding a magnetic tape in its travel around the head cylindrical drum, said offset portion (4) extending around the entire circumference of 360° and being composed of a linear section in which the magnetic tape (1) is brought into contact therewith and a further section in which the magnetic tape (1) is not brought into contact therewith; and

a plurality of guide pins (2a, 2b) each disposed on one of opposite sides of the head cylindrical drum for guiding magnetic tape (1) to and from the head cylindrical drum;

characterized in that said offset portion (4) has, in the section thereof with which the magnetic tape (1) is not brought into contact, a configuration consisting only of two parabolic lines connected to one another, the absolute value of their second derivatives with respect to the coordinate value in the circumferential direction of the cylindrical portion (3) being minimized.

2. A tape guide device of a rotary head type video tape recorder, comprising:

an upper rotary cylindrical portion (5) and a lower stationary cylindrical portion (3) constituting a head cylindrical drum;

an offset portion (4) formed on an outer circumferential surface of said lower stationary cylindrical portion (3) for guiding a magnetic tape (1) in its travel around the head cylindrical drum, said offset portion extending around the entire circumference of 360° and being composed of a linear section in which the magnetic tape (1) is brought into contact therewith and a further section in which the magnetic tape (1) is not brought into contact therewith: and a plurality of guide pins (2a, 2b) each disposed on one of the opposite sides of the head cylindrical drum for guiding the magnetic tapes (1) to and from the head cylindrical drum;

characterized in that said further section 4 has a configuration comprising at least two curved parts which are such that the second derivative of the offset portion with respect to the coordinate value in the circumferential direction of the cylindrical portion (3) is continuous over the entire circumference.

3. A tape guide device of a rotary head type video tape recorder according to claim 2, characterized in that the configuration of said each curve in said further section is constituted by a curve selected from a group consisting of a modified trapezoidal curve, modified sine curve, composite sine curve, cycloid curve, parabolic sine curve, polynominal curve, and curves formed by imparting asymmetry to these curves.

**Patentansprüche**

1. Bandführungsvorrichtung für ein Video-Bandaufzeichnungsgerät des Drehkopftyps mit einem oberen drehbaren zylindrischen Teil (5) und einem unteren feststehenden zylindrischen Teil (3), die eine zylindrische Kopftrommel bilden, einem an der äußeren Umfangsfläche des unteren feststehenden zylindrischen Teils (3) ausgebildeten abgesetzten Bereich (4) zur Führung eines Magnetbandes bei sinem Umlauf um die Zylindrische Kopftrommel, wobei sich der abgesetzte Bereich (4) um den gesamten Umfang von 360° herum erstreckt und aus einem linearen Abschnitt besteht, in dem das Magnetband (1) damit in Berührung gebracht ist und einem weiteren Abschnitt, in dem das Magnetband (1) damit nicht in Berührung gebracht ist, und einer Anzahl von Führungsstiften (2a, 2b), die jeweils auf einer der gegenüberliegenden Seiten der zylindrischen Kopftrommel zur FÜhrung des Magnetbandes (1) zur zylindrischen Kopftrommel hin und von ihr weg angeordnet sind, dadurch gekennzeichnet, daß der abgesetzte Bereich (4) in seinem nicht mit dem Magnetband (1) in Berührung gebrachten Abschnitt eine aus nur zwei miteinander verbundenen parabolischen Linien bestehende Gestalt aufweist, bei denen der Absolutwert ihrer zweiten Ableitungen in bezug auf den Koordinatenwert in der Umfangsrichtung des zylindrischen Bereichs (3) auf ein Minimum herabgesetzt ist.

2. Bandführungsvorrichtung für ein Video-Bandaufzeichnungsgerät des Drehkopftyps mit einem oberen drehbaren zylindrischen Teil (5) und einem unteren feststehenden zylindrischen Teil (3), die eine zylindrische Kopftrommel bilden, einem an der äußeren Umfangsfläche des unteren feststehenden zylindrischen Teils (3) ausgebildeten abgesetzten Bereich (4) zur Führung eines Magnetbandes bei seinem Umlauf um die zylindrische Kopftrommel, wobei sich der abgesetzte Bereich (4) um den gesamten Umfang von 360° herum erstreckt und aus einem linearen Abschnitt besteht, in dem das Magnetband (1) damit in Berührung gebracht ist und einem weiteren Abschnitt, in dem das Magnetband (1) damit nicht in Berührung gebracht ist, und einer Anzahl von Führungsstiften (2a, 2b), die jeweils auf einer der gegenüberliegenden Seiten der zylindrischen Kopftrommel zur Führung des Magnetbandes (1) zur zylindrischen Kopftrommel hin und von ihr weg angeordnet sind, dadurch gekennzeichnet, daß der weitere Abschnitt (4) eine mindestens zwei gekrümmte Teile aufweisende Gestalt aufweist, die derart beschaffen sind, daß die zweite Ableitung des abgesetzten Bereichs in bezug auf den Koordinatenwert in der Umfangsrichtung des zylindrischen Bereichs (3) über den gesamten Umfang stetig ist.

3. Bandführungsvorrichtung für ein Video-Bandaufzeichnungsgerät des Drehkopftyps nach Anspruch 2, dadurch gekennzeichnet, daß die Gestalt der jeweiligen Kurve in dem weiteren Abschnitt durch eine Kurve gebildet ist, die aus einer Gruppe ausgewählt ist, welche aus einer modifizierten Trapezkurve, modifizierten Sinuskurve, zusammengesetzten Sinuskurve, Zykloidkurve, parabolischen Sinuskurve, Polynomkurve und aus Kurven besteht, die durch Anwendung einer Asymmetrie auf diese Kurven gebildet sind.

**Revendications**

1. Dispositif de guidage de bande pour enregistreur à bande vidéo du type à tête rotative, comprenant une partie cylindrique supérieure rotative (5) et une partie cylindrique inférieure fixe (3) constituant un tambour porte-tête cylindrique, une partie décalée (4) formée sur la surface circonférentielle extérieure de la partie cylindrique inférieure fixe (3) pour guider une bande magnétique dans son passage autour du tambour porte-tête cylindrique, cette partie décalée (4) s'étendant sur toute la circonférence de 360° et étant faite d'une section linéaire dans laquelle la bande magnétique (1) est mise en contact avec elle et d'une autre section dans laquelle la bande magnétique (1) n'est pas mise en contact avec elle, et plusieurs broches de guidage (2a, 2b) disposées de part et d'autre du tambour porte-tête cylindrique pour guider la bande magnétique (1) vers le tambour porte-tête cylindrique et à partir de celui-ci, caractérisé en ce que la partie décalée (4) présente, dans sa section avec laquelle la bande magnétique (1) n'est pas mise en contact, une configuration uniquement formée de deux lignes parabolique reliées l'une à l'autre, la valeur absolue de leurs dérivées secondes par rapport à la valeur de coordonnées dans la direction circonférentielle de la partie cylindrique (3) étant réduite au minimum.

2. Dispositif de guidage de bande pour enregistreur à bande vidéo du type à tête rotative, comprenant une partie cylindrique supérieure rotative (5) et une partie cylindrique inférieure fixe (3) constituant un tambour cylindrique porte-tête, une partie décalée (4) formée sur la surface circonférentielle extérieure de la partie cylindrique inférieure fixe (3) pour guider une bande magnétiques (1) dans son passage autour du tambour cylindrique porte-tête, cette partie décalée s'étendant sur toute la circonférence de 360° et étant faite d'une section linéaire dans laquelle la bande magnétique (1) est mise en contact avec elle et d'une autre section dans laquelle la bande magnétique (1) n'est pas mise en contact avec elle, et plusieurs broches de guidage (2a, 2b) disposées de part et d'autre du tambounr porte-tête cylindrique nour guider la bande magnétique (1) vers le tambour porte-tête cylindrique et à partir de celui-ci, caractérisé en ce que l'autre section (4) présente une configuration comprenant au moins deux parties courbes qui sont telles que la dérivée seconde de la partie décalée par rapport à la valeur de coordonées dans la direction circonférentielle de la partie cylindrique (3) est continue sur toute la circonférence.

3. Dispositif de guidage de bande pour enregistreur à bande vidéo du type à tête rotative selon la revendication 2, caractérisé en ce que la configuration de chaque courbe dans l'autre section est constituée par une courbe choisie dans un groupe composé d'une courbe trapézoïdale, d'une sinusoïde modifiée, d'une sinusoïde composite, d'une cycloïde, d'une sinusoïde parabolique, d'une courbe polynominale et de courbes formées et donnant une asypétrie à ces courbes.

*FIG. 1*

*FIG. 2*

*FIG. 3*
*PRIOR ART*

*FIG. 4*
*PRIOR ART*

FIG. 5a

FIG. 5b

FIG. 6a

H

0°        180°        360°

FIG. 6b

A

O

V